(19) Europäisches Patentamt
European Patent Office
Office européen des brevets

(11) EP 0 628 799 B1

(12) EUROPÄISCHE PATENTSCHRIFT

(45) Veröffentlichungstag und Bekanntmachung des Hinweises auf die Patenterteilung:
13.08.1997  Patentblatt 1997/33

(51) Int Cl.6: **F02D 41/14**, G01N 33/00, G01M 15/00

(21) Anmeldenummer: 94107168.0

(22) Anmeldetag: 07.05.1994

(54) **Verfahren zur Erfassung und Auswertung der Emissionen von Anlagen**

Procedure for measuring and evaluating emissions from installations

Procédé de mesure des émissions d'installations et d'en dériver des informations

(84) Benannte Vertragsstaaten:
DE FR GB IT

(30) Priorität: 10.06.1993  DE 4319282

(43) Veröffentlichungstag der Anmeldung:
14.12.1994  Patentblatt 1994/50

(73) Patentinhaber: DAIMLER-BENZ AKTIENGESELLSCHAFT
70567 Stuttgart (DE)

(72) Erfinder:
• Rumez, Werner, Dr.-Ing.
  D-75417 Mühlacker (DE)
• Sumser, Siegfried, Dipl.-Ing.
  D-70184 Stuttgart (DE)

(56) Entgegenhaltungen:
EP-A- 0 300 260          EP-A- 0 463 536
DE-A- 3 729 770          DE-A- 3 933 830
DE-A- 4 001 970          DE-A- 4 005 803

• PATENT ABSTRACTS OF JAPAN vol. 12, no. 401 (P-776) 25. Oktober 1988 & JP-A-63 140 942 (TOYOTA MOTOR CORP) 13. Juni 1988
• TA-LUFT 4/86 S. 3,15,32,33
• BIMSCHG PARA 20
• VGB KRAFTWERKSTECHNIK 72 (1992) Heft 8 S. 706-708

**Beschreibung**

Die Erfindung betrifft ein Verfahren gemäß dem 1. Teil des Anspruchs 1.

Aus der DE-OS 40 05 803 ist ein solches Verfahren bekannt, bei dem die im Abgas enthaltenen Schadstoffmengen selektiv ermittelt und angezeigt werden. Die Schadstoffmengen werden entsprechend vom Fahrer einzustellenden Belastungszonen gewichtet und zur Steuerermittlung gespeichert. Somit wird der Fahrer eines Kraftfahrzeuges bei Verursachung hoher Schadstoffmengen zwar finanziell belastet, eine Einhaltung bestimmter Grenzwerte kann durch dieses Verfahren jedoch nicht gewährleistet werden.

Es ist daher Aufgabe der Erfindung, ein Verfahren zu schaffen, mit dem die Einhaltung vorgegebener Grenzwerte für die erzeugten Schadstoffmengen gemittelt über ein vorgegebenes Meßintervall gewährleistet wird.

Die Aufgabe wird durch die kennzeichnenden Merkmale des Patentanspruchs 1 gelöst. Weitere Vorteile und Ausgestaltungen gehen aus den Unteransprüchen und der Beschreibung hervor.

Im Zusammenhang mit der in der Diskussion stehenden $CO_2$-Steuer und der weiteren Reduzierung von schädlichen Abgasbestandteilen wird für Industrie- und Verbrennungsanlagen, insbesondere für Kraftfahrzeuge mit Brennkraftmaschinen, ein Verfahren zur Erfassung und Auswertung der Abgase vorgeschlagen, mit dem es neben der Erfassung und Speicherung der Abgaswerte während der Fahrt auch ermöglicht wird, die Einhaltung von Grenzwerten für die verschiedenen Schadstoffe zu erzwingen. Hierzu wird jedem Fahrzeug pro vorgegebenem Meßintervall für die einzelnen Schadstoffkomponenten des Abgases eine bestimmte Absolutmenge zugebilligt. Hieraus werden dann Grenz-Mittelwerte für die einzelnen Schadstoffmengen berechnet. Bei einem Vergleich der gemessenen Schadstoffmengen mit diesen Grenz-Mittelwerten kann dann festgestellt werden, ob die Schadstoffmengen die Grenzwerte überschreiten. Ist dies der Fall, so wird die maximale Fahrzeuggeschwindigkeit solange auf einen vorgegebenen Grenzwert beschränkt, bis die gemessenen Schadstoff-Mittelwerte wieder die Grenz-Mittelwerte unterschreiten. Durch Beschränkung der Fahrzeuggeschwindigkeit wird auch die Menge des produzierten Abgases beschränkt, so daß eine Einhaltung der Grenzwerte tatsächlich erzwungen werden kann.

In einer Ausgestaltung des Verfahrens kann vorgesehen werden, daß aus den Betriebsparametern des Fahrzeugs die Ursache für die Grenzwertüberschreitung ermittelt wird. Hierbei wird unterschieden zwischen Grenzwertüberschreitungen, die aufgrund der individuellen Fahrweise und solcher, die aufgrund einer Funktionsstörung einer Fahrzeugkomponente auftreten. Beim Vorliegen einer Funktionsstörung, beispielsweise bei einem Defekt des Katalysators, wird die Fahrgeschwindigkeit soweit begrenzt, daß das Fahrzeug nur noch im Notbetrieb gefahren werden kann. Die Aufhebung dieser Fahrgeschwindigkeitsbegrenzung kann nur nach dem Beheben der Funktionsstörung durch authorisiertes Personal erfolgen. Dadurch wird der Fahrer gezwungen, beim Auftreten einer Funktionsstörung möglichst umgehend eine Werkstatt aufzusuchen.

Tritt eine Grenzwertüberschreitung aufgrund der individuellen Fahrweise des Fahrers auf, so wird dieser durch die Begrenzung der Fahrgeschwindigkeit dazu gezwungen, solange weniger Abgase zu erzeugen, bis der Grenzwert wieder unterschritten wird. Dieser erzieherische Effekt kann noch dadurch gesteigert werden, daß dem Fahrer sowohl die aktuellen Schadstoffwerte als auch die Grenzwerte angezeigt werden. Dadurch ist er in der Lage, durch rechtzeitige Anpassung seiner Fahrweise eine Begrenzung der Fahrzeuggeschwindigkeit zu vermeiden.

Ein weiterer Vorteil des erfindungsgemäßen Verfahrens liegt darin, daß sowohl auf Testzyklen zur Ermittlung der Abgaswerte als auch auf Abgasuntersuchungen zur Ermittlung von defekten Fahrzeugkomponenten verzichtet werden kann. Durch die Erfassung und Speicherung der absoluten Schadstoffmengen können die Abgaswerte im Realbetrieb erfaßt und anschließend ausgelesen und ausgewertet werden. Die Abgasuntersuchung kann entfallen, da der Fahrer beim Vorliegen einer Funktionsstörung durch Umschalten auf Notbetrieb zur umgehenden Behebung der Störung gezwungen wird. Außerdem können die gespeicherten Schadstoffwerte zur direkten und schadstoffmengenbezogenen Steuer- oder Abgabenermittlung herangezogen werden.

Das Vorsehen einer Möglichkeit zum Unterbrechen des Verfahrens kann notwendig sein, um Gefahrensituationen zu vermeiden. Zum Beispiel kann eine Unterbrechung des Verfahrens notwendig werden, wenn während eines Überholvorgangs die Fahrgeschwindigkeit begrenzt wird. Um einen Mißbrauch dieser Möglichkeit einzuschränken könnte in diesem Fall die anfallende Schadstoffmenge separat erfaßt und mit einer um ein vielfaches höheren Abgabe belegt werden. Außerdem kann eine zeitliche Begrenzung für die Unterbrechung des Verfahrens vorgesehen werden.

Die Möglichkeit, in bestimmten Zeitabständen die Qualität der Umgebungsluft zu analysieren und die Vorgabe der Grenzwerte und Fahrstrecken in Abhängigkeit von der Qualität der Umgebungsluft vorzunehmen, hat den Vorteil, daß in einer stärker belasteten Umgebung, beispielsweise in Ballungsräumen, der Schadstoffausstoß stärker eingeschränkt wird, als in weniger belasteten Gebieten.

Das erfindungsgemäße Verfahren ist nachstehend anhand einer Zeichnung, die einen Ablaufplan für die Anwendung des Verfahrens für ein Kraftfahrzeug mit Brennkraftmaschine zeigt, näher beschrieben. Nach dem Start des Verfahrens in Block 1 wird im Block 2 das Abgas analysiert und die darin enthaltenen Schadstoffmengen $M_{ist}(i)$ selektiv erfaßt und anschließend im Block 3 abgespeichert. Aus den gespeicherten Schadstoffmengen $M_{ist}(i)$ werden dann in Block 4 die Schadstoff-Mittelwerte $\overline{M}_{ist}(i)$ über eine vorgegebene Fahrstrecke s berechnet und anschließend in Block 5 mit entsprechenden Schwellwerten $\overline{M}_{schwell}(i)$ verglichen. Übersteigt keiner der Schadstoff-Mittelwerte $\overline{M}_{ist}(i)$ den entsprechenden Schwellwert $\overline{M}_{schwell}(i)$, so wird zum Block 7 gesprungen. Übersteigt dagegen einer der Schadstoff-Mittelwerte $\overline{M}_{ist}(i)$ den entsprechenden Schwellwert $\overline{M}_{schwell}(i)$, so wird zum Block 6 verzweigt und ein Warnsignal für den Fahrer ausgegeben. Anschließend wird das Verfahren in Block 7 fortgesetzt, wo die Schadstoff-Mittelwerte $\overline{M}_{ist}(i)$ mit entsprechenden Grenz-Mittelwerten $\overline{M}_{max}(i)$ verglichen werden. Übersteigt keiner der Schadstoff-Mittelwerte $\overline{M}_{ist}(i)$ den entsprechenden Grenz-Mittelwert $\overline{M}_{max}(i)$, so wird zum Block 8 verzweigt. Nachdem im Block 8 eine eventuell vorgegebene Maximalgeschwindigkeit $V_{grenz}$ für das Fahrzeug zurückgenommen beziehungsweise auf den Maximalwert $V_{max}$ zurückgesetzt ist, wird an den Beginn von Block 2 zurückgesprungen.

Übersteigt dagegen in Block 7 zumindest einer der Schadstoff-Mittelwerte $\overline{M}_{ist}(i)$ den entsprechenden Grenz-Mittelwert $\overline{M}_{max}(i)$, so wird in Block 9 überprüft, ob die Grenzwertüberschreitung aufgrund einer Funktionsstörung der Brennkraftmaschine oder einer anderen Fahrzeugkomponente erfolgt ist. Wird hierbei keine Funktionsstörung erkannt, so kann davon ausgegangen werden, daß die Grenzwertüberschreitung durch die individuelle Fahrweise des Fahrzeuglenkers verursacht wurde. In diesem Fall wird zum Block 10 gesprungen, wo die maximale Fahrzeuggeschwindigkeit $V_{grenz}$ auf einen ersten Wert $V_1$ begrenzt wird. Anschließend wird das Verfahren in Block 2 fortgesetzt.

Wird in Block 9 dagegen eine Funktionsstörung erkannt, so wird zum Block 11 gesprungen, wo die maximale Fahrzeuggeschwindigkeit $V_{grenz}$ auf einen zweiten Wert $V_2$ begrenzt wird. Diese Geschwindigkeitsbegrenzung $V_2$ bleibt solange wirksam, bis die Funktionsstörung in einer Werkstatt behoben wird. Erst bei diesem Werkstattbesuch 12 kann das Verfahren nach der Reparatur durch autorisiertes Fachpersonal zurückgesetzt und in Block 1 erneut gestartet werden. Die Geschwindigkeitsbegrenzung $V_2$ wird zweckmäßigerweise so gewählt, daß nur noch ein Notbetrieb des Fahrzeugs möglich ist. Durch die eingeschränkten Fahreigenschaften wird der Fahrer einerseits dazu angehalten, die Werkstatt umgehend aufzusuchen. Andererseits sind die Fahreigenschaften aber nur soweit eingeschränkt, daß die Werkstatt noch aus eigener Kraft erreicht werden kann.

Die Erfassung der einzelnen Schadstoffmengen $M_{ist}(i)$ erfolgt in einem dazu geeigneten Analysator, dem vorzugsweise ein definierter Teilabgasstrom, beispielsweise über ein Entnahmeventil, zugeführt wird. Die Analyse kann in vorgegebenen Zeitabständen oder nach vorgegebenen Fahrstrecken oder in Motorbetriebspunkten, die kennfeldabhängig vorbestimmt sind, durchgeführt werden. Ebenso denkbar ist aber auch eine permanente Abgasentnahme. Das Abgas wird dabei selektiv nach einzelnen Schadstoffkomponenten i, beispielsweise NOx, CO, HC oder Rußpartikel, untersucht. Für jede Schadstoffkomponente i wird ein separater Grenz-Mittelwert $\overline{M}_{max}(i)$ vorgegeben. Ein Überschreiten der zulässigen Grenz-Mittelwerte $\overline{M}_{max}(i)$ kann in Block 7 dann erkannt werden, wenn ein oder mehrere der Grenz-Mittelwerte $\overline{M}_{max}(i)$, beziehungsweise bestimmte Kombinationen von Grenz-Mittelwerten $\overline{M}_{max}(i)$ überschritten werden.

Zur Beurteilung des Schadstoffausstoßes werden die Schadstoffkomponenten i über eine vorgegebene Fahrstrecke s gemittelt. Dadurch werden umgebungsbedingte oder von einzelnen Fahrsituationen abhängige Schwankungen ausgeglichen. Außerdem kann der Fahrzeuglenker durch eine vorausschauende Fahrweise während normalen Verkehrsbedingungen seine Abgaswerte soweit reduzieren, daß in kurzzeitigen Extremsituationen, beispielsweise während eines Überholvorgangs oder einer Bergfahrt, die Grenzwerte nicht sofort überschritten werden. Überschreitet er dennoch den Grenz-Mittelwert $\overline{M}_{max}(i)$, so wird durch Begrenzung der Maximalgeschwindigkeit $V_{grenz}$ der Schadstoffausstoß begrenzt und somit das Einhalten der Grenz-Mittelwerte $\overline{M}_{max}(i)$ erzwungen. Paßt der Fahrzeuglenker seine Fahrweise trotz Überschreiten des Grenz-Mittelwertes $\overline{M}_{max}(i)$ nicht an, so wird er über einen längeren Zeitraum in seinen Fahreigenschaften eingeschränkt. Reduziert er dagegen den Schadstoffausstoß durch angepaßte Fahrweise, so wird die Geschwindigkeitseinschränkung $V_{grenz}$ relativ schnell wieder zurückgenommen. Die Geschwindigkeitsbegrenzung kann dabei beispielsweise über eine Drehzahl- oder eine Lastbegrenzung realisiert werden. Durch dieses System wird außerdem die Anschaffung schadstoffarmer Fahrzeuge attraktiver, während bei Fahrzeugen mit erhöhtem Schadstoffausstoß mit einer stärkeren Einschränkung der Freiheiten der individuellen Fahrweise gerechnet werden muß.

Die Schwellwerte $\overline{M}_{schwell}(i)$ dienen dazu, den Fahrer vor dem Erreichen der Grenz-Mittelwerte $\overline{M}_{max}(i)$ zu warnen. Hierzu werden die Schwellwerte $\overline{M}_{schwell}(i)$ jeweils kleiner als die entsprechenden Grenz-Mittelwerte $\overline{M}_{max}(i)$ gewählt. Die Schwellwerte $\overline{M}_{schwell}(i)$ bilden somit eine Art Toleranzband unterhalb der Grenz-Mittelwerte $\overline{M}_{max}(i)$. Innerhalb des Toleranzbandes wird der Fahrer durch ein optisches und/oder akustisches Warnsignal vorgewarnt. Eine Begrenzung der Fahrgeschwindigkeit erfolgt nur dann, wenn trotz der Warnung die Schadstoff-Mittelwerte $(\overline{M}_{ist}(i))$ weiter steigen. Nehmen die Schadstoff-Mittelwerte $(\overline{M}_{ist}(i))$ nach einer Überschreitung der Grenzwerte $\overline{M}_{max}(i)$ wieder ab, so bleiben die Warnsignale solange aktiviert, bis auch die Schwellwerte $\overline{M}_{schwell}(i)$ unterschritten werden und somit mit einer Beschränkung der Fahrgeschwindigkeit nicht mehr gerechnet werden muß. In diesem Zusammenhang ist es aber auch denkbar, daß die Beschränkung der Fahrgeschwindigkeit erst dann wieder zurückgenommen wird, wenn die Schadstoff-Mittelwerte ($\overline{M}_{ist}$ (i)) nicht nur unter die Grenz-Mittelwerte $\overline{M}_{max}$(i), sondern auch wieder unter die Schwellwerte $\overline{M}_{schwell}$(i) gefallen sind.

Die Freiheit, die dem Fahrzeuglenker zugebilligt wird, ist abhängig von der vorgegebenen Fahrstrecke s. Bei einer Mittelwertbildung über eine kurze Fahrstrecke s können nur geringe Schwankungen im Schadstoffausstoß ausgeglichen werden. Bei einer Mittelwertbildung über lange Fahrstrecken s kann der Fahrzeuglenker Schadstoffmengen einsparen, die er dann bei späteren Fahrten aufbrauchen kann. Hierzu ist es sinnvoll, dem Fahrer die aktuellen Schadstoffmengen $M_{ist}$(i) und die dazugehörigen Grenz-Mittelwerte $\overline{M}_{max}$(i) anzuzeigen.

Neben einer festen Vorgabe können die Grenz-Mittelwerte $\overline{M}_{max}$(i), die Schwellwerte $\overline{M}_{schwell}$(i), die Fahrstrecke s oder der Gewichtungsfaktor für eine automatische Abgabenerhebung auch an lokale Gegebenheiten angepaßt werden. Hierzu kann der Analysator in bestimmten Abständen dazu benutzt werden, die Qualität der Umgebungsluft zu bestimmen. Abhängig von diesen Meßwerten können dann die Vorgaben verändert werden. Damit kann der zulässige Schadstoffausstoß in besonders belasteten Gebieten, beispielsweise in Ballungsräumen, stärker begrenzt werden. Weiterhin kann bei den Vorgaben auch die Topographie berücksichtigt werden. So können beispielsweise in einer bergigen Umgebung höhere Grenzwerte zugelassen werden, als im Flachland. Auch berücksichtigt werden kann dabei auch die Beladung beziehungsweise die Zahl der Insassen im Fahrzeug. In diesem Zusammenhang wäre es sinnvoll, die Vorgeschichte der Abgaserzeugung, beispielsweise eine Staufahrt, bei der Ermittlung der Vorgaben zu beachten. Hierzu werden die Vorgabewerte über einen funktionalen Zusammenhang zwischen den Betriebszuständen, in denen sich das Fahrzeug während der vorgegeben Fahrstrecke befunden hat, und den Vorgabewerten berechnet. Dies kann beispielsweise dadurch realisiert werden, daß die Kennfeldbereiche, die während eines Meßintervalls durchlaufen werden, markiert werden und anschließend bei der Ermittlung der Vorgabewerte mit unterschiedlicher Gewichtung beitragen.

Um den Mißbrauch solcher Einrichtungen zu verhindern kann zusätzlich ein Täuschungsschutz vorgesehen werden. Hierzu kann beispielsweise aus Betriebsparametern die voraussichtliche Abgasmenge ermittelt und mit den am Analysator ankommenden Abgasmengen verglichen werden. Wird hierbei ein Fehler erkannt, so wird sofort auf Notbetrieb umgeschaltet, so daß der Fahrer zu einem Werkstattbesuch und zum Beheben des Fehlers gezwungen wird.

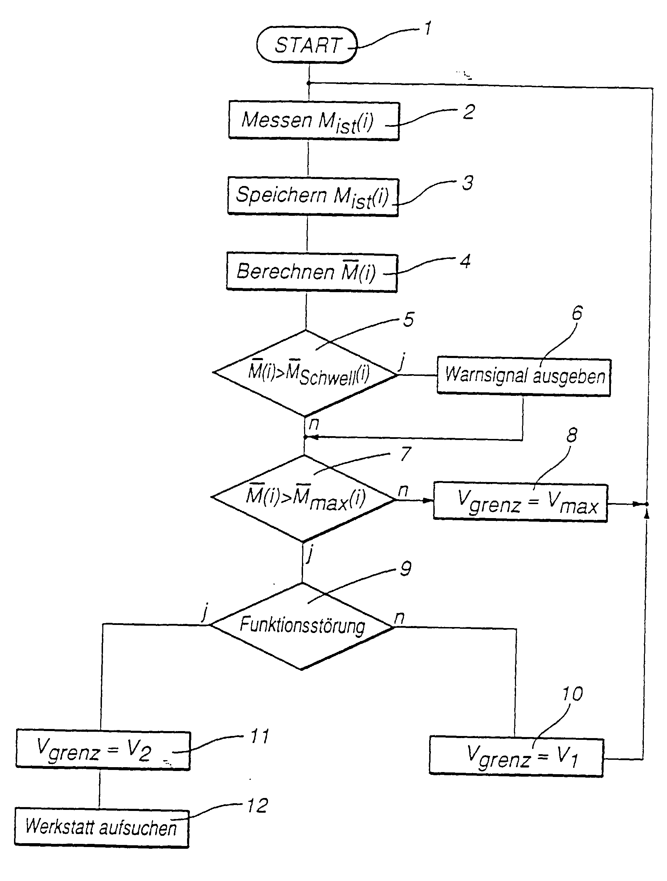

## Patentansprüche

1. Verfahren zur Erfassung und Auswertung der Abgase von Fahrzeugen, wobei die Abgaszusammensetzung analysiert und die Absolutmengen einzelner Schadstoffe bestimmt wird und wobei die ermittelten Schadstoffwerte mit vorgegebenen Grenzwerten verglichen wird,
   **dadurch gekennzeichnet**,
   daß Grenz-Mittelwerte ($\overline{M}_{max}$(i)) pro vorgegebener Fahrstrecke (S) für die einzelnen Schadstoffe (i) vorgegebenen werden, daß die ermittelten Schadstoffmengen ($M_{ist}$ (i)) über die vorgegebene Fahrstrecke (S) aufsummiert und Mittelwerte ($M_{ist}$(i)) gebildet werden und daß die Fahrgeschwindigkeit (V) auf einen vorgegebenen Maximalwert ($V_{max}$) begrenzt wird, wenn zumindest einer der Schadstoff-Mittelwerte ($M_{ist}$(i)) den entsprechenden Grenz-Mittelwert ($\overline{M}_{max}$(i)) überschreitet.

2. Verfahren nach Anspruch 1,
   **dadurch gekennzeichnet,**
   daß anhand der Betriebsparameter des Fahrzeugs ermittelt wird, ob die Überschreitung des Grenz-Mittelwertes ($\overline{M}_{max}$(i)) aufgrund einer Funktionsstörung erfolgt.

3. Verfahren nach Anspruch 2,
   **dadurch gekennzeichnet,**
   daß bei Vorliegen einer Funktionsstörung die Begrenzung der Fahrgeschwindigkeit (V) nur nach der Beseitigung der Funktionsstörung durch eine Werkstatt zurückgenommen werden kann.

4. Verfahren nach Anspruch 2,
   **dadurch gekennzeichnet,**
   daß bei Vorliegen einer Funktionsstörung der Maximalwert ($V_2$) für die Fahrgeschwindigkeit (V) so gewählt ist, daß nur noch ein Notbetrieb möglich ist.

5. Verfahren nach Anspruch 2,
   **dadurch gekennzeichnet,**
   daß bei einer Überschreitung eines Grenz-Mittelwertes ($\overline{M}_{max}$(i)) ohne Vorliegen einer Funktionsstörung die Fahrgeschwindigkeit (V) des Fahrzeuges solange auf einen Wert ($V_1$) begrenzt wird, bis der ermittelte Schadstoff-Mittelwert ($\overline{M}_{ist}$(i)) den Grenz-Mittelwert ($\overline{M}_{max}$(i)) wieder unterschreitet.

6. Verfahren nach Anspruch 1,
   **dadurch gekennzeichnet,**
   daß die Schadstoff-Mittelwerte ($\overline{M}_{ist}$(i)) und die Grenz-Mittelwerte ($\overline{M}_{max}$(i)) angezeigt werden.

7. Verfahren nach Anspruch 1,
   **dadurch gekennzeichnet,**
   daß die Schadstoff-Mittelwerte ($\overline{M}_{ist}$(i)) mit entsprechenden Schwellwerten ($\overline{M}_{schwell}$(i)) verglichen werden, wobei die Schwellwerte ($\overline{M}_{schwell}(i)$) kleiner als die Grenz-Mittelwerte ($\overline{M}_{max}(i)$) sind, und daß bei Überschreiten eines Schwellwertes ($\overline{M}_{schwell}(i)$) ein Warnsignal ausgegeben wird.

8. Verfahren nach Anspruch 1,
**dadurch gekennzeichnet,**
daß die ermittelten Schadstoffmengen ($\overline{M}_{ist}(i)$) gespeichert und zur Steuererhebung ausgelesen werden können.

9. Verfahren nach Anspruch 1,
**dadurch gekennzeichnet,**
daß das Verfahren unterbrochen werden kann und daß die während der Unterbrechung des Verfahrens anfallenden Schadstoffmengen ($M_{unt}(i)$) separat erfaßt und ausgewertet werden.

10. Verfahren nach Anspruch 1,
**dadurch gekennzeichnet,**
daß zu vorgegebenen Zeitpunkten die Qualität der Umgebungsluft analysiert und die Grenz-Mittelwerte ($\overline{M}_{max}(i)$) in Abhängigkeit von der Qualität der Umgebungsluft vorgegeben werden.

11. Verfahren nach Anspruch 10,
**dadurch gekennzeichnet,**
daß das Meßintervalle (S) in Abhängigkeit von der Qualität der Umgebungsluft vorgegeben wird.

**Claims**

1. Method for detecting and evaluating the exhaust gases from vehicles, the exhaust gas composition being analysed and the absolute quantities of individual pollutants being determined, and the pollutant values detected being compared with preset limit values, characterized in that limiting averages ($\overline{M}_{max}(i)$) per preset distance (S) travelled are preset for the individual pollutants (i), that the detected pollutant quantities ($M_{act}(i)$) are summated over the preset distance (S) travelled and averages ($\overline{M}_{act}(i)$) are formed, and that the running speed (V) is restricted to a preset maximum value ($V_{max}$) when at least one of the pollutant averages ($\overline{M}_{act}(i)$) exceeds the corresponding limiting average ($\overline{M}_{max}(i)$).

2. Method according to Claim 1, characterized in that it is determined by reference to the operating parameters of the vehicle whether the limiting average ($\overline{M}_{max}(i)$) is exceeded owing to a functional fault.

3. Method according to Claim 2, characterized in that, if a functional fault is present, the restriction of the running speed (V) can be lifted only after the functional fault has been eliminated by a workshop.

4. Method according to Claim 2, characterized in that, if a functional fault is present, the maximum value ($V_2$) for the running speed (V) is selected such that only emergency running is still possible.

5. Method according to Claim 2, characterized in that, when a limiting average ($\overline{M}_{max}(i)$) is exceeded without the presence of a functional fault, the running speed (V) of the vehicle is restricted to a value ($V_1$) until the pollutant average ($\overline{M}_{act}(i)$) determined falls again below the limiting average ($\overline{M}_{max}(i)$).

6. Method according to Claim 1, characterized in that the pollutant averages ($\overline{M}_{act}(i)$) and the limiting averages ($\overline{M}_{max}(i)$) are indicated.

7. Method according to Claim 1, characterized in that the pollutant averages ($\overline{M}_{act}(i)$) are compared with corresponding threshold values ($\overline{M}_{thr}(i)$), the threshold values ($\overline{M}_{thr}(i)$) being smaller than the limiting averages ($\overline{M}_{max}(i)$), and that a warning signal is issued when a threshold value ($\overline{M}_{thr}(i)$) is exceeded.

8. Method according to Claim 1, characterized in that the pollutant quantities ($M_{act}(i)$) determined are stored and can be read out for levying the tax.

9. Method according to Claim 1, characterized in that the method can be interrupted and that the pollutant quantities ($M_{int}(i)$) arising during the interruption of the method are detected and evaluated separately.

10. Method according to Claim 1, characterized in that the quality of the surrounding air is analysed at preset times and the limiting averages ($\overline{M}_{max}(i)$) are preset as a function of the quality of the surrounding air.

11. Method according to Claim 10, characterized in that the measurement interval (S) is preset as a function of the quality of the surrounding air.

**Revendications**

1. Procédé pour la détection et l'estimation des gaz d'échappement de véhicules, au moyen duquel la composition des gaz d'échappement est analysée et les quantités absolues de polluants isolés sont estimées et au moyen duquel les valeurs en polluants déterminées sont comparées à des valeurs maximales prédéterminées, caractérisé en ce que des valeurs moyennes maximales ($\overline{M}_{max}(i)$) sont prédéterminées pour les polluants isolés pour un trajet prédéterminé (S), en ce que les quantités de polluants déterminées (i) sont additionnées pour le trajet prédéterminé (S) et des valeurs moyennes

$(\overline{M}_{ist}(i))$ sont établies et en ce que la vitesse de conduite (V) est limitée à une valeur maximale prédéterminée ($V_{max}$), lorsqu'au moins une des valeurs moyennes en polluants $(\overline{M}_{ist}(i))$ dépasse la valeur maximale correspondante $(\overline{M}_{max}(i))$.

2. Procédé selon la revendication 1, caractérisé en ce que selon les paramètres de fonctionnement du véhicule, on détermine, si le dépassement de la valeur maximale $(\overline{M}_{max}(i))$ a lieu en raison d'une défaillance de fonctionnement.

3. Procédé selon la revendication 2, caractérisé en ce qu'en présence d'une défaillance de fonctionnement, la limitation de la vitesse de conduite (V) peut être reprise seulement après l'élimination de la défaillance de fonctionnement par un atelier.

4. Procédé selon la revendication 2, caractérisé en ce qu'en présence d'une défaillance de fonctionnement, la valeur maximale ($V_2$) pour la vitesse de conduite (V) est choisie de manière à ce que seulement une commande de secours est possible.

5. Procédé selon la revendication 2, caractérisé en ce que lors d'un dépassement d'une valeur moyenne maximale $(\overline{M}_{max}(i))$ en l'absence d'une défaillance de fonctionnement, la vitesse de conduite (V) du véhicule est limitée jusqu'ici à une valeur ($V_1$), jusqu'à ce que la valeur moyenne en polluants déterminée $(\overline{M}_{ist}(i))$ dépasse de nouveau la valeur moyenne maximale $(\overline{M}_{max}(i))$.

6. Procédé selon la revendication 1, caractérisé en ce que les valeurs moyennes en polluants $(\overline{M}_{ist}(i))$ et les valeurs moyennes maximales $(\overline{M}_{max}(i))$ sont affichées.

7. Procédé selon la revendication 1, caractérisé en ce que les valeurs moyennes en polluants $(\overline{M}_{ist}(i))$ sont comparées aux valeurs de seuil $(\overline{M}_{schwell}(i))$ correspondantes, les valeurs de seuil $(\overline{M}_{schwell}(i))$ étant ainsi inférieures aux valeurs moyennes maximales $(\overline{M}_{max}(i))$, et en ce que lors du dépassement d'une valeur de seuil $(\overline{M}_{schwell}(i))$, un signal d'avertissement est émis.

8. Procédé selon la revendication 1, caractérisé en ce que les quantités de polluants déterminées ($M_{ist}(i)$) peuvent être stockées et extraites pour une amélioration de la commande.

9. Procédé selon la revendication 1, caractérisé en ce que le procédé peut être interrompu et en ce que les quantités de polluants ($M_{unt}(i)$) produites lors de l'interruption du procédé peuvent être détectées et estimées séparément.

10. Procédé selon la revendication 1, caractérisé en ce qu'à des moments prédéterminés, la qualité de l'air ambiant est analysée et les valeurs moyennes maximales $(\overline{M}_{max}(i))$ sont prédéterminées en fonction de la qualité de l'air ambiant.

11. Procédé selon la revendication 10, caractérisé en ce que l'intervalle de mesure (S) est prédéterminé en fonction de la qualité de l'air ambiant.

START — 1

Messen $M_{ist}(i)$ — 2

Speichern $M_{ist}(i)$ — 3

Berechnen $\overline{M}(i)$ — 4

$\overline{M}(i) > \overline{M}_{Schwell}(i)$ — 5    j    Warnsignal ausgeben — 6

n

$\overline{M}(i) > \overline{M}_{max}(i)$ — 7    n    $V_{grenz} = V_{max}$ — 8

j

Funktionsstörung — 9    j    n

$V_{grenz} = V_2$ — 11    $V_{grenz} = V_1$ — 10

Werkstatt aufsuchen — 12